# EUROPEAN PATENT APPLICATION

(11) **EP 4 641 510 A1**
(43) Date of publication of application: **29.10.2025**
(21) Application number: 24744834.3
(22) Date of filing: 15.01.2024
(51) Int. Cl.: G06T 19/00, G06T 17/05, G06V 20/64, G06F 16/28, G06F 16/29, G06Q 50/10, G06Q 30/06

(54) **METHOD AND ELECTRONIC DEVICE FOR ACQUIRING SPATIAL MAP**

(30) Priority: 17.01.2023 KR 20230006998; 03.05.2023 KR 20230057771
(71) Applicant: Samsung Electronics Co., Ltd., Suwon-si, Gyeonggi-do 16677 (KR)
(72) Inventor: LEE, Yongseok, Suwon-si, Gyeonggi-do 16677 (KR); KWAK, Sejin, Suwon-si, Gyeonggi-do 16677 (KR); LEE, Geunho, Suwon-si, Gyeonggi-do 16677 (KR)
(74) Representative: Gulde & Partner
(86) International application number: PCT/KR2024/000721
(87) International publication number: WO 2024/155054

(57) **Abstract**

A method performed by an electronic device for obtaining a spatial map is provided. The method includes recognizing an object belonging to a space from space scan information for the space obtained by using at least one sensor, obtaining feature information relating to an object unrecognizable through an object recognition model from the space scan information, identifying, by using a query based on the obtained feature information, the object unrecognizable through the object recognition model based on a personalized database, and generating a spatial map for the space based on the space scan information and object information for the object belonging to the space.

## Description

### TECHNICAL FIELD

The disclosure relates to a method and electronic device for obtaining a spatial map.

### BACKGROUND ART

The Internet is evolving from a human-oriented connectivity network where humans generate and consume information to an Internet of things (IoT) network where distributed entities or things exchange information between themselves and process the information. Internet of Everything (IoE) technologies, in which a big data processing technology through connection with a cloud server, for example, are combined with an loT technology, have also emerged. IoT may be applied to such areas as smart home appliances, smart homes, smart buildings, smart cities, etc., through convergence and combination between the existing information technology (IT) and various industries.

Electronic devices connected to one another in an loT environment may each collect, generate, analyze or process data, and mutually share the data to use it for tasks of each device. With the recent rapid development in the field of computer vision, various types of electronic devices that use a neural network model for performing a vision task are being developed. Hence, there is a growing interest in connection between the various types of electronic devices in the loT environment.

The above information is presented as background information only to assist with an understanding of the disclosure. No determination has been made, and no assertion is made, as to whether any of the above might be applicable as prior art with regard to the disclosure.

### DISCLOSURE

### Technical Solution

An embodiment of the disclosure is to address at least the above-mentioned problems and/or disadvantages and to provide at least the advantages described below. In accordance with an embodiment of the disclosure, a method performed by an electronic device for obtaining a spatial map is provided. The method of obtaining a spatial map may include recognizing an object belonging to a space from space scan information for the space obtained by using at least one sensor. The method of obtaining a spatial map may also include obtaining feature information relating to an object unrecognizable through an object recognition model from the space scan information. The method of obtaining a spatial map may also include identifying the object unrecognizable through the object recognition model based on a personalized database by using a query based on the obtained feature information. Furthermore, a method of obtaining a spatial map may include generating a spatial map for the space, based on the space scan information and object information for an object belonging to the space.

An embodiment will be set forth in part in the description which follows and, in part, will be apparent from the description, or may be learned by practice of the presented embodiments.

In accordance with an embodiment of the disclosure, an electronic device for obtaining a spatial map is provided. The electronic device includes a memory storing one or more programs, one or more processors, and a sensing module including at least one sensor. The one or more processors may be configured to execute the one or more programs to recognize an object belonging to a space from space scan information for the space obtained by using the sensing module. Also, the one or more processors may be configured to execute the one or more programs to obtain feature information relating to an object unrecognizable through an object recognition model from the space scan information. Also, the one or more processors may be configured to execute the one or more programs to identify the object unrecognizable through the object recognition model based on a personalized database by using a query based on the feature information. Also, the one or more processors may be configured to execute the one or more programs to generate a spatial map for the space based on the space scan information and object information for an object belonging to the space.

In accordance with an embodiment of the disclosure, provided is a computer-readable recording medium having recorded thereon a program for performing the aforementioned method of obtaining a spatial map.

Other aspects, advantages, and salient features of the disclosure will become apparent to those skilled in the art from the following detailed description, which, taken in conjunction with the annexed drawings, discloses various embodiments of the disclosure.

### DESCRIPTION OF DRAWINGS

The above and other aspects, features, and advantages of certain embodiments of the disclosure will be more apparent from the following description taken in conjunction with the accompanying drawings, in which:
FIG. 1 is a diagram for describing a home Internet of things (IoT) environment in which an electronic device and external devices are connected to one another according to an embodiment of the disclosure;
FIGS. 2A and 2B are diagrams for describing a spatial map according to various embodiments of the disclosure;
FIGS. 3A, 3B, 3C and 3D are diagrams for describing how to use layers that constitute a spatial map according to various embodiments of the disclosure;
FIG. 4 is a flowchart for describing a method of obtaining a spatial map, according to an embodiment of the disclosure;
FIG. 5 is a diagram for describing a space to which belongs an object unrecognizable through an object recognition model from space scan information according to an embodiment of the disclosure;
FIG. 6 is a flowchart for describing a method of obtaining a spatial map for a space to which belongs an object unrecognizable through an object recognition model from space scan information, according to an embodiment of the disclosure;
FIG. 7 is a diagram for describing a database built in a cloud server, according to an embodiment of the disclosure;
FIG. 8 is a diagram for describing operations of an electronic device obtaining a spatial map, according to an embodiment of the disclosure;
FIG. 9 is a diagram for describing operations of an electronic device obtaining a spatial map through communication with a cloud server, according to an embodiment of the disclosure;
FIGS. 10 and 11 are block diagrams each illustrating a configuration of an electronic device, according to an embodiment of the disclosure; and
FIG. 12 is a block diagram illustrating a configuration of a server, according to an embodiment of the disclosure.

The same reference numerals are used to represent the same elements throughout the drawings.

### MODE FOR INVENTION

The following description with reference to the accompanying drawings is provided to assist in a comprehensive understanding of various embodiments of the disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the disclosure. In addition, descriptions of well-known functions and constructions may be omitted for clarity and conciseness.

Terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

Throughout the disclosure, the expression "at least one of a, b or c" indicates only a, only b, only c, both a and b, both a and c, both b and c, all of a, b, and c, or variations thereof.

The terms are selected as common terms widely used now, taking into account principles of the disclosure, which may however depend on intentions of those of ordinary skill in the art, judicial precedents, emergence of new technologies, and the like. Some terms as herein used are selected at the applicant's discretion, in which case, the terms will be explained later in detail in connection with embodiments of the disclosure. Therefore, the terms should be defined based on their meanings and descriptions throughout the disclosure.

All terms including technical and scientific terms used herein have the same meaning as commonly understood by one of ordinary skill in the art to which this disclosure belongs. Terms including ordinal numbers like 'first', 'second', etc., may be used to indicate various components, but the components should not be restricted by the terms. These terms are used to distinguish one element from another.

The term "include (or including)" or "comprise (or comprising)" is inclusive or open-ended and does not exclude additional, unrecited elements or method steps. The terms "unit", "module", "block", etc., as used herein each represent a unit for handling at least one function or operation, and may be implemented in hardware, software, or a combination thereof.

Functions related to Al according to embodiments of the disclosure are operated through a processor and a memory. There may be one or more processors. The one or more processors may include a universal processor such as a central processing unit (CPU), an application processor (AP), a digital signal processor (DSP), etc., a graphic processing unit (GPU), a vision processing unit (VPU), etc., or a dedicated artificial intelligence (AI) processor such as a neural processing unit (NPU). The one or more processors may control processing of input data according to a predefined operation rule or an Al model stored in the memory. When the one or more processors are the dedicated Al processors, they may be designed in a hardware structure that is specific to dealing with a particular Al model.

The predefined operation rule or the Al model may be made by learning. Specifically, a predefined operation rule or an Al model being made by learning refers to the predefined operation rule or the Al model established to perform a desired feature (or an object) being made when a basic Al model is trained by a learning algorithm with a lot of training data. Such learning may be performed by a device itself in which Al is performed according to the disclosure, or by a separate server and/or system. Examples of the learning algorithm may include supervised learning, unsupervised learning, semi-supervised learning, or reinforcement learning, without being limited thereto.

The Al model may include a plurality of neural network layers. Each of the plurality of neural network layers may have a plurality of weight values, and perform neural network operation through operation between an operation result of the previous layer and the plurality of weight values. The plurality of weight values owned by the plurality of neural network layers may be optimized by learning results of the Al model. For example, the plurality of weight values may be updated to reduce or minimize a loss value or a cost value obtained by the Al model during a training procedure. An artificial neural network may include, for example, a convolutional neural network (CNN), a deep neural network (DNN), a recurrent neural network (RNN), a restricted Boltzmann machine (RBM), a deep belief network (DBN), a bidirectional recurrent deep neural network (BRDNN), or a deep Q-network, without being limited thereto.

It should be appreciated that the blocks in each flowchart and combinations of the flowcharts may be performed by one or more programs which include instructions. The entirety of the one or more programs may be stored in a single memory or the one or more programs may be divided with different portions stored in different multiple memories.

Any of the functions or operations described herein can be processed by one processor or a combination of processors. The one processor or the combination of processors is circuitry performing processing and includes circuitry like an application processor (AP, e.g. a central processing unit (CPU)), a communication processor (CP, e.g., a modem), a graphical processing unit (GPU), a neural processing unit (NPU) (e.g., an artificial intelligence (AI) chip), a Wi-Fi chip, a Bluetooth chip, a global positioning system (GPS) chip, a near field communication (NFC) chip, connectivity chips, a sensor controller, a touch controller, a finger-print sensor controller, a display drive integrated circuit (IC), an audio CODEC chip, a universal serial bus (USB) controller, a camera controller, an image processing IC, a microprocessor unit (MPU), a system on chip (SoC), an integrated circuit (IC), or the like.

Embodiments of the disclosure will now be described in detail with reference to accompanying drawings to be readily practiced by those of ordinary skill in the art. However, the embodiments of the disclosure may be implemented in many different forms, and not limited thereto as will be discussed herein.

The disclosure will now be described with reference to accompanying drawings.

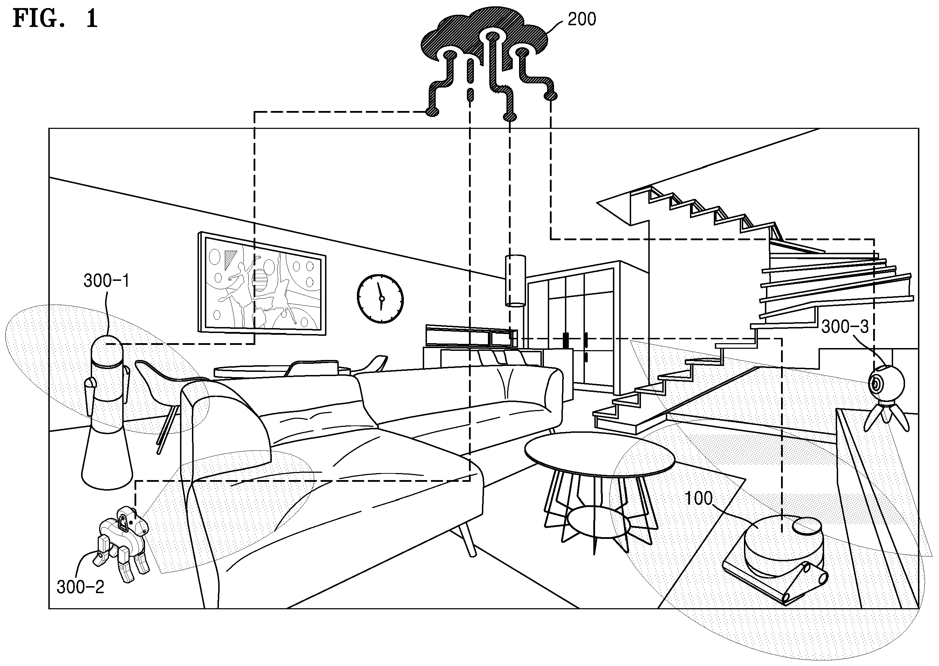

FIG. 1 is a diagram for describing a home Internet of things (IoT) environment in which an electronic device 100 and external devices are connected to one another according to an embodiment of the disclosure.

Although the electronic device 100 is assumed to be a robot cleaner, it may be any of various types of assistant robots or mobile devices driven for user convenience, augmented reality (AR) devices, virtual reality (VR) devices, or a device for detecting surrounding conditions or providing certain services in a particular location or space. The electronic device 100 may be equipped with a neural network model and various types of sensors for scanning a space and detecting an object in the space. For example, the electronic device 100 may be at least one of an image sensor such as a camera, a light detection and ranging (LiDAR) sensor such as a laser distance sensor (LDS) or a time of flight (ToF) sensor. The electronic device 100 may be equipped with at least one model such as a DNN, a CNN, an RNN, and a BRDNN, and may use a combination thereof.

External devices connected to the electronic device 100 may be a cloud server 200 and various types of loT devices 300-1, 300-2 and 300-3. The loT devices may include, as shown in FIG. 1, a butler robot 300-1, a pet robot 300-2, a smart home camera 300-3, etc., but are not limited thereto and may be devices of the same type as the electronic device 100. The butler robot 300-1, the pet robot 300-2 and the smart home camera 300-3 may each use many different types of sensors equipped therein to scan a space and detect an object in the space.

In an embodiment of the disclosure, the electronic device 100 may use space scan information or object information collected from each of the butler robot 300-1, the pet robot 300-2 and the smart home camera 300-3 to generate and store a spatial map as spatial information for the space including at least one object. The electronic device 100, the butler robot 300-1, the pet robot 300-2 and the smart home camera 300-3 may store and share the space scan information or object information or the spatial map by transmitting or receiving the space scan information or the object information or the spatial map to or from one another.

Even in the same space, the devices scan the space and detect an object at different viewing angles from different viewpoints depending on each device's position, performance or sensing range, whether each device is stationary or mobile, an operating behavior of each device, or the like, so sensing information including an image or sound obtained from one of the devices may be beneficially used to train an Al model in another device.

In an embodiment of the disclosure, one of the electronic device 100, the butler robot 300-1, the pet robot 300-2 and the smart home camera 300-3 may be a master device or a server device and the other devices may be slave devices or client devices. A device corresponding to the master device or the server device may receive, store and manage the space scan information or object information, or the spatial map from the other loT devices. The device corresponding to the master device or the server device may classify the received information by location, store and manage them. For example, the device corresponding to the master device or the server device may classify, collect and manage the space scan information or object information, or the spatial map depending on whether the devices are in the same space, same section or same region. The device corresponding to the master device or the server device may update first information that has been stored to second information corresponding to the same location, thereby maintaining recency and accuracy of information relating to the location.

In an embodiment of the disclosure, the electronic device 100, the butler robot 300-1, the pet robot 300-2 and the smart home camera 300-3 may transmit the space scan information or object information, or the spatial map to the cloud server 200 to store and manage the space scan information or object information or the spatial map through the cloud server 200. For example, when transmission of the space scan information or object information or the spatial map to the electronic device 100 is not possible because the loT devices are being powered off or performing a certain function, the electronic device 100 may request and receive the space scan information or object information or the spatial amp from the cloud server 200.

Referring to FIG. 1, the cloud server 200 may manage the space scan information or object information or the spatial map received from each of the electronic device 100, the butler robot 300-1, the pet robot 300-2 and the smart home camera 300-3, and monitor a space in the house. The cloud server 200 may store and manage the space scan information or object information or the spatial map collected from the plurality of loT devices for each registered user account or registered location. For example, the cloud server 200 may classify, collect and manage the space scan information or object information or the spatial map depending on whether the devices are in the same space or same section. The cloud server 200 may transmit information about a space in the house such as the spatial map in response to a request of the electronic device 100, the butler robot 300-1, the pet robot 300-2 and the smart home camera 300-3 located in the house.

In an embodiment of the disclosure, instead of the cloud server 200, an Al hub (e.g., an Al speaker) located in the house may receive, store and manage the space scan information or object information or the spatial map from an loT device in the house. The Al hub may store and manage the space scan information or object information or the spatial map collected from the plurality of loT devices for each space or section in the house.

In an embodiment of the disclosure, the Al hub located in the house may store and manage the space scan information or object information or the spatial map together with the cloud server 200. For example, in order to generate or manage a spatial map, the Al hub may process the space scan information or object information or convert data to protect personal information and transmit the result to the cloud server 200. The cloud server 200 may process the information received from the Al hub to store and manage the space scan information or object information or the spatial map and transmit the result to the Al hub.

In an embodiment of the disclosure, the electronic device 100 such as a robot cleaner may use the spatial map to perform a task such as cleaning. For this, the electronic device 100 may update the spatial map with the latest space scan information by scanning the space with various types of sensors. The electronic device 100 may update the spatial map stored in the electronic device 100 by using not only information sensed by itself but also all or part of spatial maps received from the cloud server 200, the butler robot 300-1, the pet robot 300-2 and the smart home camera 300-3 connected to one another in a home loT environment.

For example, to clean a space in the house, a robot cleaner may perform cleaning by using the spatial map stored in the robot cleaner after the robot cleaner is fully charged at a charging station. The robot cleaner may intactly use a spatial map that has been used recently to perform cleaning on the same space. However, as a state of the space during the previous cleaning is different from a current state of the space, it is desirable to reflect the latest information of objects located in the space in the spatial map to perform efficient cleaning. For this, the robot cleaner may depart from the charging station and collect object information in the space by itself while traveling major routes in advance. However, in this case, the prior traveling may require extra time and consume the battery more quickly. The robot cleaner may then receive the latest spatial map from another robot cleaner or at least one external device located in the same space and update the spatial map stored in the robot cleaner.

The robot cleaner may use part or the whole of the spatial map received from the external device. The robot cleaner may use the spatial map received from the same kind of robot cleaner as it is or use information about objects expected to be frequently changed in location to update the spatial map. The robot cleaner may use part or the whole of a spatial map for the same space even received from a heterogeneous device to update a spatial map.

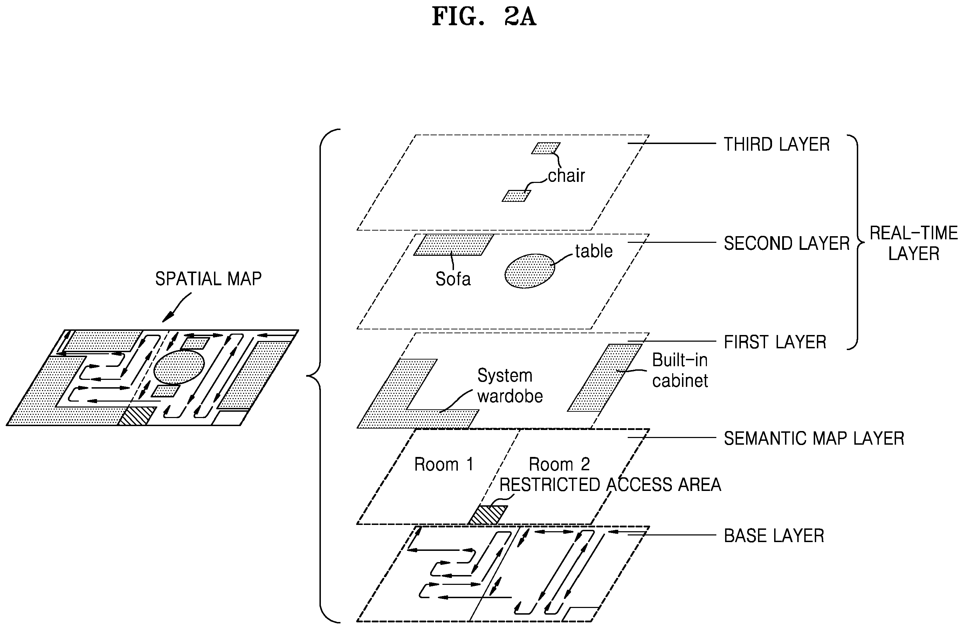

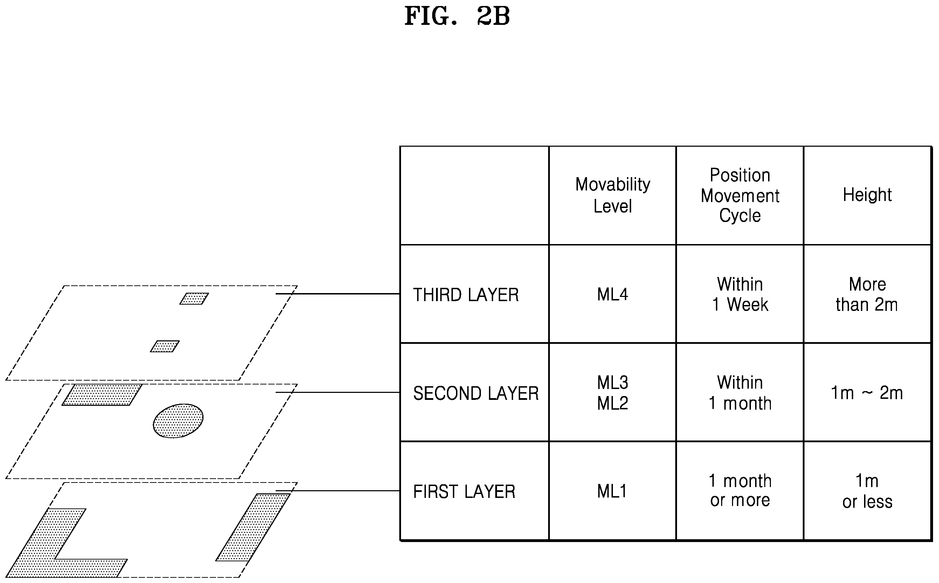

FIGS. 2A and 2B are diagrams for describing a spatial map according to various embodiments of the disclosure.

Referring to FIG. 2A, a spatial map stored in the electronic device 100, which is a robot cleaner, and a hierarchical structure of a plurality of layers that constitute the spatial map are illustrated. As shown in FIG. 2A, the spatial map may include a base layer, a semantic map layer, and a real-time layer, but it is not limited thereto and a layer may be added thereto or omitted therefrom depending on a feature of a task.

The base layer provides information about basic structures of the whole space such as walls, pillars, aisles, etc. By processing three-dimensional (3D) point cloud data, matching coordinate systems and storing locations, the base layer may provide 3D information of the space, location information of objects, travel trajectory information, etc. The base layer serves as a base map and a geometric map.

The semantic map layer is a layer on the base layer for providing semantic information. The user of the electronic device 100 may give the basic structures of the whole space on the base layer semantic information such as 'room 1', 'room 2', 'restricted access area', etc., and use them to perform a task of the electronic device 100. For example, in a case that the electronic device 100 is a robot cleaner, the user may set semantic information on the semantic map layer to let the robot cleaner clean 'room 2' or prevent the robot cleaner from cleaning 'restricted access area'.

The real-time layer is a layer for providing information about at least one object in the space. The object may include both a stationary object and a mobile object. In the disclosure, the real-time layer may include a plurality of layers based on property information of the objects and may have a hierarchical structure of the layers. As shown in FIG. 2A, the real-time layer may include a first layer, a second layer and a third layer, but is not limited thereto and the number of layers may increase or decrease depending on classification criteria of the property information of the objects. In FIG. 2A, it may be seen that a system wardrobe and a built-in cabinet are included on the first layer, a table and a sofa are included on the second layer, and chairs are included on the third layer.

Referring to FIG. 2B, shown are various examples of the real-time layer including the plurality of layers based on the property information of the objects.

The property information of the object may be information that may be classified by an objective criterion such as the object's type, shape, size, height, or the like, or a combination thereof. Furthermore, the property information of the object may vary depending on the user and the environment, so the property information may be input by being labeled for each object.

In an embodiment of the disclosure, when the property information of the object is a movability level (ML) of the object, an object corresponding to ML 1 may be included on the first layer, objects corresponding to ML 2 and ML 3 may be included on the second layer, and an object corresponding to ML 4 may be included on the third layer. An ML of an object may be determined by applying an objective feature of the object to a certain classification criterion to evaluate the movability. For example, ML 1 corresponds to an immobile object, ML 2 an object that is movable but mainly stays stationary, ML3 an object that is movable but moves from time to time, and ML4 an object that is movable and often moves.

In an embodiment of the disclosure, when the property information of the object is a position movement cycle of the object, an object that has been motionless at a position within one month may be included on the first layer, an object that has moved within a month may be included on the second layer, and an object that has moved within a week may be included on the third layer. Unlike the ML classified based on an objective feature of the object, the position movement cycle may be different depending on the environment in which the user who uses the object or the object is located even for the same object. For example, object A may be an object frequently used by a first user but rarely used by a second user. Object B may be an object frequently used in a first location but rarely used in a second location.

In an embodiment of the disclosure, when the property information of the object is height at which the object is located, an object corresponding to 1 meter (m) or less may be included on the first layer, an object corresponding to 1 m to 2 m may be included on the second layer, and an object exceeding more than 2 m may be included on the third layer.

In an embodiment of the disclosure, the classification criterion for the plurality of layers included in the real-time layer may be defined by the user. For example, the user may create a spatial map in which a feature of the task is reflected by setting a combination of property information of a plurality of types of objects for the classification criterion. For example, in the case of a robot cleaner, it generally travels below a height of 50 centimeter (cm), so there is no need to consider the objects located higher than 1 m, e.g., lights or frames hung on the wall. Hence, the user may set a classification criterion in person to classify the respective layers so that the first layer includes an object corresponding to ML1 and located below 1 m or less, the second layer includes an object corresponding to ML2 or ML3 and located below 1 m or less, and the third layer includes an object corresponding to ML 4 and located below 1 m or less.

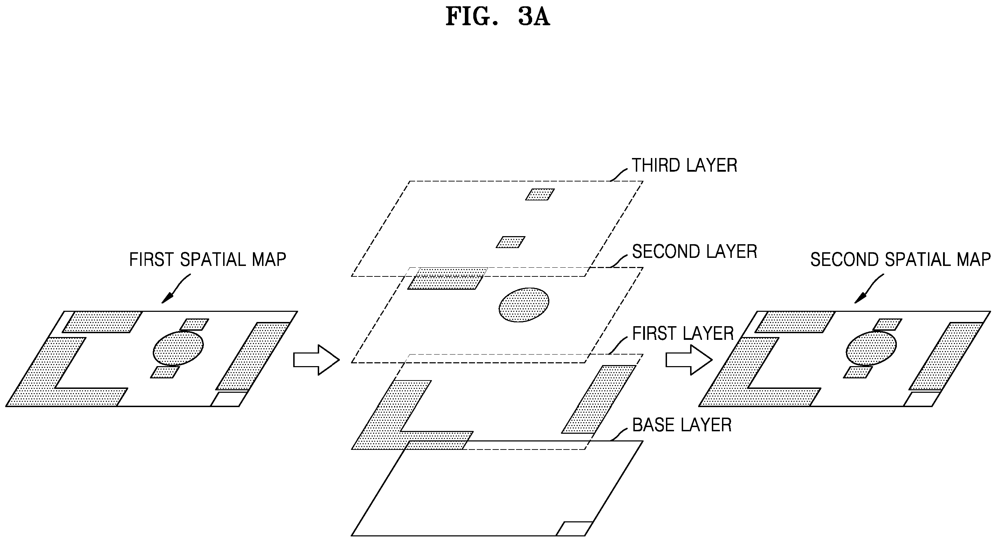

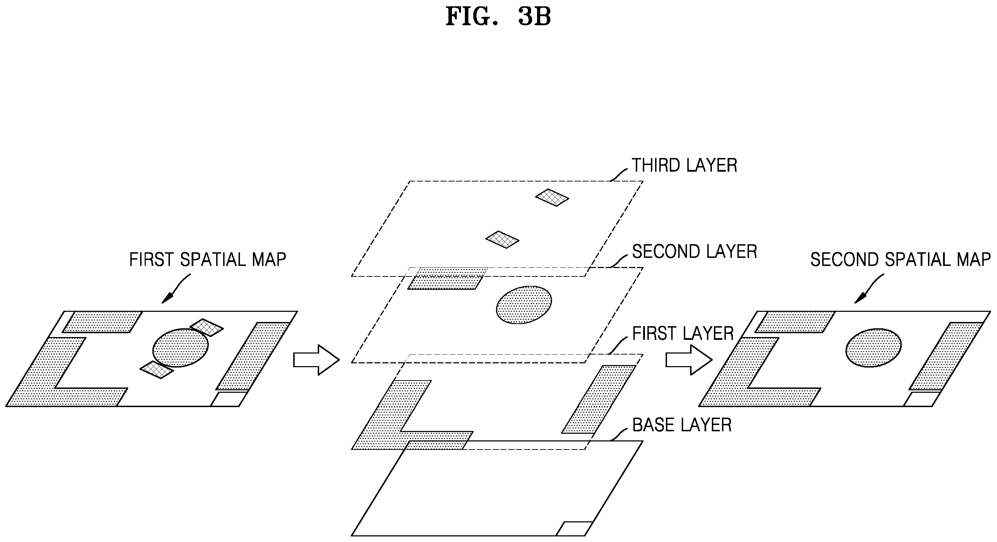

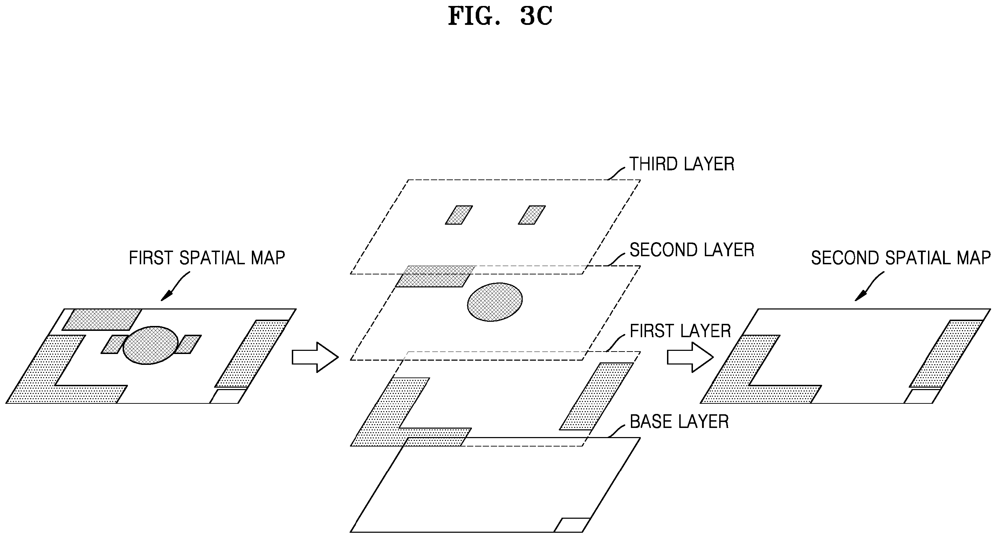

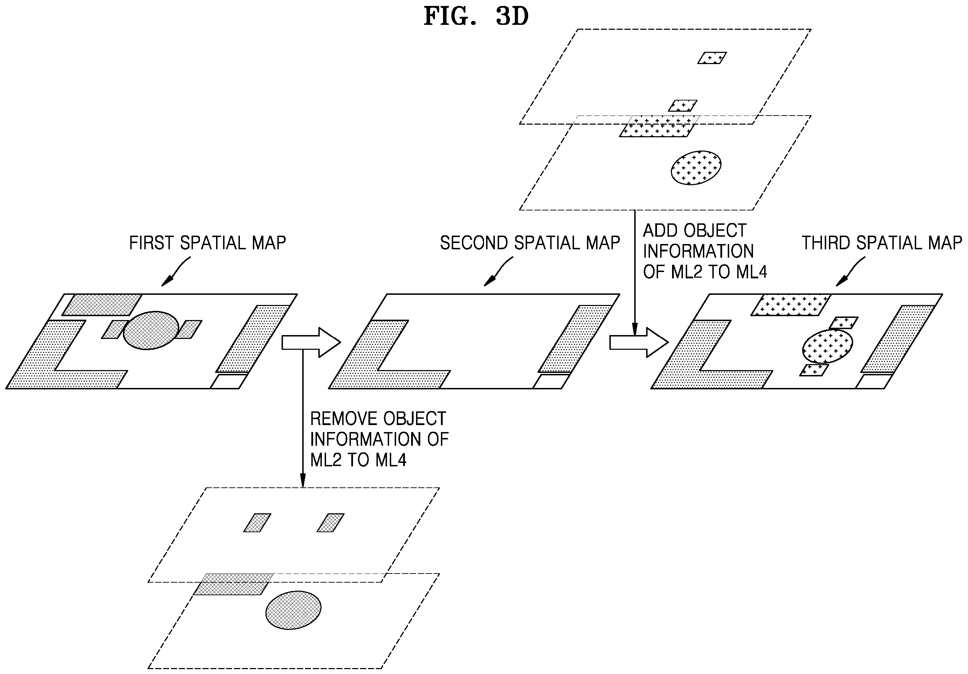

FIGS. 3A, 3B, 3C and 3D are diagrams for describing how to use layers that constitute a spatial map according to various embodiments of the disclosure.

Depending on types of the electronic device 100 and loT devices or a feature of the task, spatial maps to be used by the respective devices may be different from one another. The electronic device 100 may intactly use an existing spatial map stored in the electronic device 100, but may update the spatial map to reflect a change when the change is made in a space where a task is to be performed. The electronic device 100 may update the existing spatial map by receiving, from at least one external device, a spatial map that has already reflected a change made in the space. The electronic device 100 may generate a new spatial map based on the existing spatial map.

Referring to FIG. 3A, the electronic device 100 may call out the existing spatial map (hereinafter, a first spatial map) that has been stored therein. The first spatial map may include a base layer, a first layer, a second layer and a third layer. For convenience of explanation, it will now be assumed that the first to third layers include objects according to the arbitrary classification criterion of FIG. 2B. When the first spatial map was generated a few minutes ago or there has been no change in the space since the first spatial map was used, the electronic device 100 may use the first spatial map as it is to obtain a new spatial map (hereinafter, a second spatial map) and use the second spatial map to perform a new task.

Referring to FIG. 3B, the electronic device 100 may call out the first spatial map that has been stored therein. When the electronic device 100 does not require information about an object of ML 4 that frequently moves, or uses information about an object that has been motionless for at least one week in performing a task, the electronic device 100 may obtain the second spatial map by selecting the base layer, the first layer and the second layer from among the layers of the first spatial map or removing the third layer from the first spatial map.

Referring to FIG. 3C, the electronic device 100 may call out the first spatial map that has been stored therein. When the electronic device 100 requires object information of ML 1 or uses information about an object that has been motionless for at least one month in performing a new task, the electronic device 100 may obtain the second spatial map by selecting the base layer and the first layer from among the layers of the first spatial map or removing the second and third layers from the first spatial map.

Referring to FIG. 3D, the electronic device 100 may call out the first spatial map that has been stored therein. When the electronic device 100 needs to reflect the latest information about movable objects corresponding to ML 2, ML 3 and ML 4 in performing a new task, the electronic device 100 may obtain the second spatial map by selecting the base layer and the first layer from among the layers of the first spatial map or removing the second and third layers from the first spatial map. After this, the electronic device 100 may obtain a third spatial map by extracting the second and third layers from a spatial map received from an external device and reflecting them in the second spatial map. Alternatively, the electronic device 100 may obtain a third spatial map by using at least one sensor equipped therein to detect objects corresponding to ML 2, ML 3 and ML 4 and reflecting them in the second spatial map.

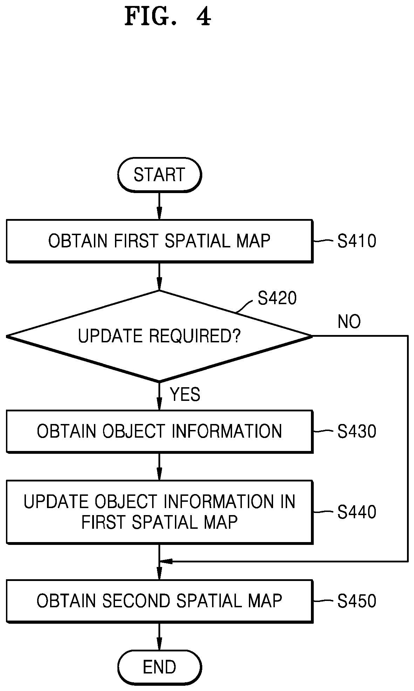

FIG. 4 is a flowchart for describing a method of obtaining a spatial map, according to an embodiment of the disclosure.

The electronic device 100 may obtain a first spatial map in operation S410. The first spatial map may include a plurality of layers based on property information of objects. The first spatial map may be generated by the electronic device 100 or received from a device external to the electronic device 100.

The electronic device 100 may determine whether there is a need to update the first spatial map in operation S420. For example, the electronic device 100 may determine whether the first spatial map needs to be updated based on a feature of a task. The task refers to a work set to be performed by the electronic device 100 through an inherent use of the electronic device 100 or a function to be performed in the electronic device 100. Setting information relating to performing the task may be input by the user in person to the electronic device 100 or transmitted to the electronic device 100 through a terminal such as a mobile device or a dedicated remote controller. For example, when the electronic device 100 is a robot cleaner, a task of the robot cleaner may be cleaning the house or cleaning an area set by the user, or may be reserved cleaning according to a reservation function, low-noise mode cleaning, or the like. When the electronic device 100 lacks information to be used to perform the task, it may determine that the first spatial map needs to be updated. When the electronic device 100 requires the latest information about objects in a space where the task is to be performed, it may determine that update is required. Alternatively, the electronic device 100 may determine, based on a time elapsed from when the first spatial map is obtained or a set update interval, that the first spatial map needs to be updated. When there is no need to update the first spatial map, the electronic device 100 may use the first spatial map as the second spatial map to be used to perform the task.

When the first spatial map needs to be updated, the electronic device 100 may obtain object information in operation S430. The electronic device 100 may use at least one sensor to collect the space scan information or object information by itself. The electronic device 100 may receive part or the whole of the spatial map or the space scan information or object information from the external device.

The electronic device 100 may use the space scan information or object information obtained to update the space scan information or object information of the first spatial map, in operation S440. For example, for an object that moves frequently, the electronic device 100 may update the first spatial map by newly obtaining the object information to reflect the latest location information or space scan information of where the object is located.

The electronic device 100 may obtain the second spatial map, in operation S450. The electronic device 100 may obtain the second spatial map by using the first spatial map as it is, using the first spatial map with some object information or some layers modified, or updating the first spatial map.

In the meantime, the second spatial map to be used to perform the task may be used by being modified into a suitable form of map or being generated according to a function of the electronic device 100 or a feature of the task. For example, when the electronic device 100 is a robot cleaner, it may generate a navigation map based on the spatial map and perform cleaning along a traveling route provided in a navigation map.

In an embodiment of the disclosure, the spatial map may be generated by collecting the space scan information or object information collected from different devices. The spatial map may further include information in a metadata form indicating what device or what location and/or time it is that each information is collected from. For example, when different devices scan a certain space and detect an object at different locations and/or viewpoints, the spatial map may be generated by using images obtained from the respective devices or object recognition results obtained from the images. For each object in the space, the spatial map may include tagged or labeled information indicating the object recognition result and what location and/or time it is that the object recognition result is obtained from.

As described above, the spatial map may be generated by taking into account a feature of the task of the electronic device 100 to be performed in the space. As the task of the electronic device 100 to be performed in the space is influenced by objects located in the space, the cloud server 200 may store and manage the object information for the objects located in the space in a database. The database may register and store the object information such as the object's identification information and property information for each object. The object information stored in the database may be used not only to generate a spatial map but also to identify an object unrecognizable through an object recognition model from the space scan information.

The object recognition model is used to recognize an object from the space scan information. The object recognition model may be used to recognize an object from an image corresponding to the space scan information. The object recognition model may receive an input of an image, and may output a probability value of an image or an object in the image belonging to each class corresponding to a category of the object. With the output value of the object recognition model, what class it is that the object belongs to may be determined. The object recognition model may extract a feature from the image and classify the class of the object based on the extracted feature. For example, the object recognition model may classify the class of the object by obtaining a location where the object is estimated to be in the image and a feature value and operating the obtained feature value along nodes and edges included in each of fully connected layers. The object recognition model may use an activation function such as a softmax function to output a probability value calculated for each class.

'Unable to recognize an object through the object recognition model' means that the object has a failure to be determined as an object in a certain class, as a result of classifying the object based on the feature value extracted from the space scan information by using the object recognition model. In other words, 'an object unrecognizable through the object recognition model' means an object having a failure to be determined as an object in a certain class, as a result of classifying the object based on the feature value extracted from the space scan information by using the object recognition model.

When it is highly reliable that the object exists in the space scan information but the probability value of the object for each class is not that reliable, the object in the space scan information may be treated as being unrecognizable through the object recognition model. The object recognition model may output top n values among probability values (or scores) for each class of all objects that may be recognized by the object recognition model as the object recognition result. When the output has a larger value, it means that the object is more likely to be in the class. However, the output value needs to be larger than a certain threshold, which is a reference to determine whether the object recognition result is reliable. For example, the object recognition model may output 0.35, 0.15, 0.13, 0.11 and 0.1 as top 5 probability values for a class as object recognition results. In this case, when the certain threshold, a reference to determine whether the object recognition result is reliable is 0.4, any output probability values are not larger than 0.4, so the object recognition through the object recognition model may be treated as a failure.

When it is highly reliable that the object exists in the space scan information but the difference between probability values of the object for each class is not meaningful and thus, it is not possible to determine the object to be in a certain class, the object in the space scan information may be treated as being unrecognizable through the object recognition model. For example, the object recognition model may output 0.45, 0.44, 0.05, 0.04 and 0.01 as top 5 probability values for a class as object recognition results. Among them, probability value 0.45 corresponding to class A and probability value 0.44 corresponding to class B are larger than the certain threshold 0.4, the reference to determine whether the object recognition result is reliable. Although the probability value of class A is larger than the probability value of class B by a tiny difference of 0.01, there is a good chance that the actual object belongs not to class A but to class B in consideration of calculation errors of probability values. In this case, object recognition through the object recognition model may be treated as a failure.

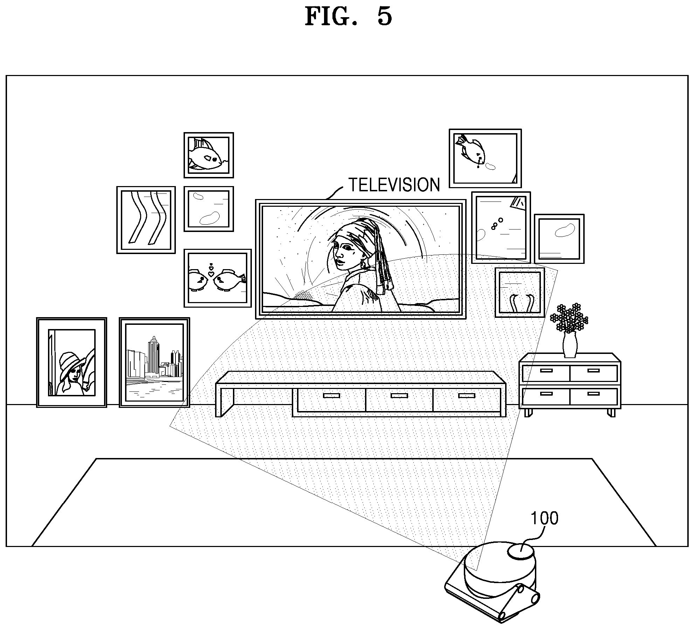

FIG. 5 is a diagram for describing a space to which an object unrecognizable through an object recognition model from space scan information belongs according to an embodiment of the disclosure.

The space scan information for a space may be obtained using at least one sensor equipped in the electronic device 100. For example, the electronic device 100 may include a sensor such as a camera, a LiDAR sensor, a ToF sensor, etc. For example, when the electronic device 100 is equipped with a camera, it may obtain a red green blue (RGB) signal and generate an image of the space from the RGB signal. In another example, when the electronic device 100 is equipped with a LiDAR sensor, it may obtain data of a point cloud form, and may identify information such as location, size, shape, etc., of at least one object in the space by clustering.

The electronic device 100 may recognize an object belonging to the space from the space scan information such as an image obtained by using the camera or the information identified by using the LiDAR sensor. The electronic device 100 may include a plurality of sensors of the same type or different types to accurately recognize an object. Despite this, some objects may not be recognized or distinguished accurately due to the unity of design planned in an interior design stage or similarity in appearance between objects.

Referring to FIG. 5, illustrated is the electronic device 100 using at least one sensor to obtain space scan information in a living room. As shown in FIG. 5, in a case that several frames and a wall-mounted television are placed on one wall of the living room, the electronic device 100 may not accurately recognize each object from the space scan information. When the wall-mounted television has a function of displaying famous paintings or photos while the user is not watching television, it may be more difficult to distinguish it from an actual frame and thus, recognition of the object through the object recognition model may fail. Apart from the example shown in FIG. 5, in a case of a built-in dishwasher and a lower section of a sink, and a fridge and a freezer, the object may not be accurately recognized from the probability values output through the object recognition model due to similarity in appearance between the objects or an intended interior design plan. As such, in a case of a space to which an object unrecognizable through the object recognition model from the space scan information belongs, object information stored in the database of the cloud server 200 may be used to generate a spatial map where objects in the space are accurately recognized. How to obtain a spatial map for a space to which an object unrecognizable through the object recognition model from the space scan information belongs will now be described in detail.

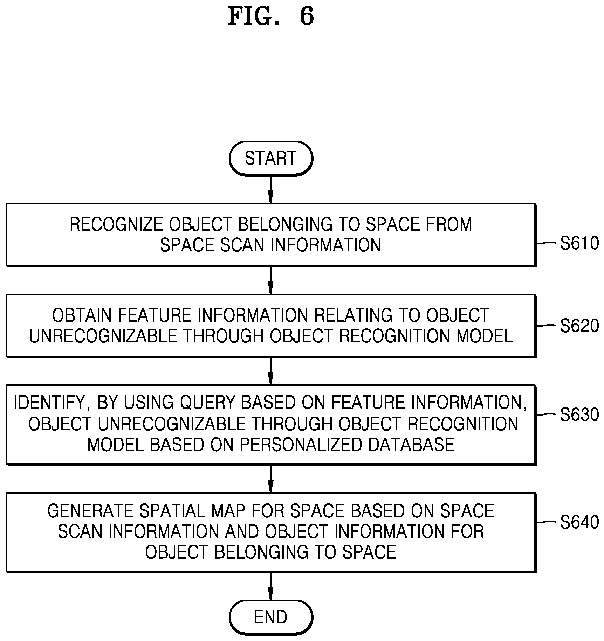

FIG. 6 is a flowchart for describing a method of obtaining a spatial map for a space to which an object unrecognizable through an object recognition model from space scan information belongs, according to an embodiment of the disclosure.

In operation S610, the electronic device 100 may recognize an object belonging to a space from space scan information for the space, obtained by using at least one sensor. For example, the electronic device 100 may recognize an object belonging to the space from space scan information by using an object recognition model. For example, the object recognition model may analyze and classify the object with an input of an image generated from RGB signals or clustered point cloud data. The electronic device 100 recognizes the object belonging to the space according to analysis and classification of the object. An object not recognized by the object recognition model or not classified as an object in a certain class may be treated as an unrecognizable object. The electronic device 100 may label the space scan information based on the object recognition result of the object recognition model. For example, object information of the object may be labeled on an area recognized as the object in the space scan information.

In operation S620, the electronic device 100 may obtain feature information relating to an object unrecognizable through the object recognition model from the space scan information. For example, the electronic device 100 may extract feature information relating to the object unrecognizable through the object recognition model from the space scan information labeled according to the object recognition result, by using a feature analysis model. For example, the electronic device 100 may obtain, from an image generated from RGB signals or clustered point cloud data, feature information relating to the object unrecognizable through the object recognition model from the space scan information. The electronic device 100 may use a feature analysis model to extract feature information relating to the object unrecognizable through the object recognition model from the space scan information labeled according to the object recognition result.

In operation S630, the electronic device 100 may use a query based on the feature information relating to an object unrecognizable through the object recognition model, to identify the object unrecognizable through the object recognition model based on a personalized database. The electronic device 100 may estimate the object unrecognizable through the object recognition model as an object of a certain class based on the personalized database. The electronic device 100 may determine the object of the certain class by comparing the object unrecognizable through the object recognition model with information stored in the personalized database.

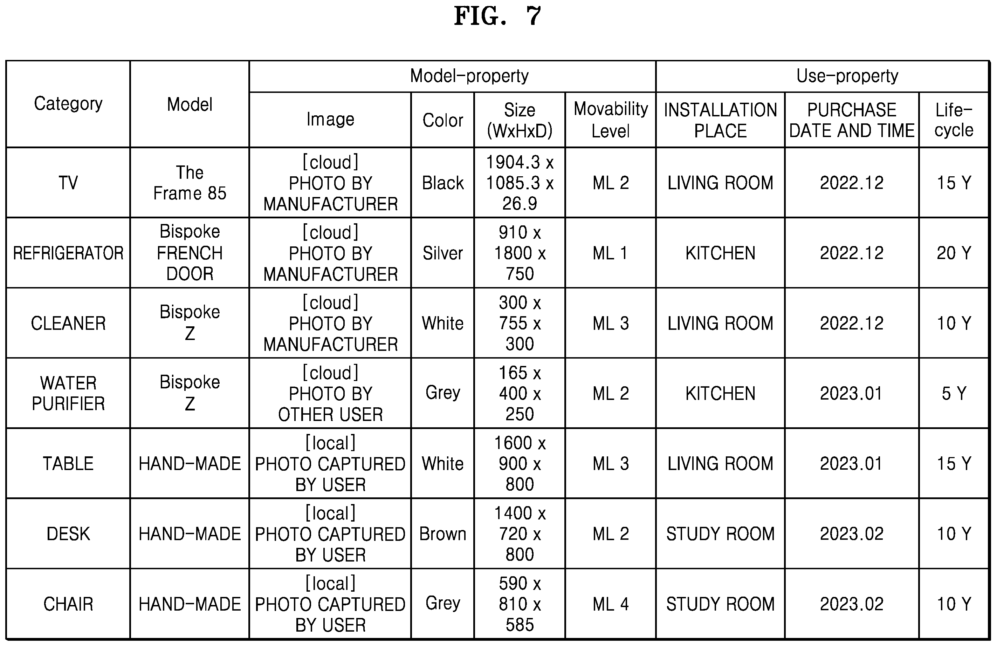

The query is a request to collect object information of at least one object whose property information for each object stored in the personalized database matches to a certain level or higher with the feature information relating to the object unrecognizable through the object recognition model. The personalized database may register property information of each object belonging to assets of the user for each object. The personalized database may register property information of each object belonging to the assets of the user for each object and for each certain space. For example, the personalized database may store property information of objects located in the user's house or office for each object. The personalized database may store property information of the objects located in a section in the user's house or in a section in the user's office for each object. The property information of an object may include model-property information determined in a production process of the object and use-property information determined in a use process of the user. The personalized database and interworking between the personalized database and the query will be described later in detail in connection with FIG. 7.

The electronic device 100 may obtain information about object candidates from the personalized database in response to the query. The electronic device 100 may compare feature information included in the query with property information of each object stored in the personalized database to obtain information about object candidates having property information corresponding to the feature information. For example, the electronic device 100 may receive information about object candidates from the cloud server 200 as a response to transmitting the query to the cloud server 200 including the personalized database. The information about object candidates may include identification information of top n objects having property information with high similarity to the feature information. The information about object candidates may include identification information of top n objects and at least one property information corresponding to the identification information of each object. The at least one property information may include image information of the object.

The electronic device 100 may compare estimated image information of an object unrecognizable through the object recognition model with image information of each object included in the object candidates, and based on a result of the comparing, identify the object unrecognizable through the object recognition model. The electronic device 100 may compare image information estimated from an area where the object unrecognizable through the object recognition model is present with image information of each object included in the object candidates. Based on a result of the comparing, the electronic device 100 may identify an object corresponding to image information having the highest similarity to the estimated image information as an object unrecognizable through the object recognition model. When the estimated image information of an object unrecognizable through the object recognition model may not be obtained, the electronic device 100 may shift its location into a certain viewpoint, and use at least one sensor at the shifted location to generate estimated image information of the object unrecognizable through the object recognition model.

In operation S640, the electronic device 100 may generate a spatial map for the space based on the space scan information and object information for an object belonging to the space. The object information for an object belonging to the space may include object information of an object recognized through the object recognition model from the space scan information, and object information of an object not recognizable through the object recognition model but identified based on the personalized database. For example, the electronic device 100 may update the personalized database based on the space scan information and object information of an object belonging to the space. The electronic device 100 may generate a spatial map for a space, based on the updated personalized database.

FIG. 7 is a diagram for describing a database built in the cloud server 200, according to an embodiment of the disclosure.

The cloud server 200 may be connected to a website that sells objects such as the electronic device 100, the loT devices 300-1, 300-2 and 300-3, a user equipment (not shown), an electronic product or furniture installed or placed in the same space or a social network service (SNS) that promotes them to receive and store object information. The cloud server 200 may store and manage object information of objects located in the space in the database. When receiving a request for the database from an external device such as the electronic device 100, the loT devices 300-1, 300-2 and 300-3, the user equipment (not shown), etc., the cloud server 200 may transmit, to the external device, part or the whole of the database, or certain information stored in the database in response to the request.

For example, the cloud server 200 may receive object information from the electronic device 100 or the IoT devices 300-1, 300-2 and 300-3 when the electronic device 100 or the loT devices 300-1, 300-2 and 300-3 are installed or placed in a certain space. The cloud server 200 may receive object information from the user equipment. After purchasing an object such as an electronic product or furniture, the user may input object information of the object purchased to the user equipment in person or capture a product identification number such as a model name or a quick response (QR) code and transmit it to the cloud server 200. When an object such as the electronic product or furniture is installed or placed in a certain space, the cloud server 200 may receive object information from a website that sells the object or an SNS that promotes the object.

On the other hand, when an existing object installed or placed in the certain space is taken out from the certain space, object information relating to the object may be deleted from the database of the cloud server 200.

The cloud server 200 may manage the database by personalizing it for each user and/or space. The personalized database may register property information of each object belonging to assets of the user for each object. The personalized database may register property information of each object belonging to the assets of the user for each object and for each certain space. Referring to FIG. 7, the personalized database may store identification information of a category and model name of each object and property information of the object. The property information of an object may include model-property information determined in a production process of the object and use-property information determined in a use process of the user.

The model-property information may be information about an image, color, size, mobility level, etc., of the object, without being limited thereto. The image of the object may be a photo captured by the user in person, including a front photo and a photo after the object is installed or placed. The image of the object may be photos of the product provided by the manufacturer, which may be posted on the catalog or website. The image of the object may be a photo uploaded by another user. Furthermore, the image of the object may be a processed image such as a 3D model or photos captured at a capturing angle of a certain viewpoint. The color of the object may be a major color of the object or a color of a distinctive portion of the object.

In FIG. 7, it is seen that an electronic product having a category of the object corresponding to 'TV' and a model name being 'The Frame 85' has model-property information including image information corresponding to 'photos of the product provided by the manufacturer', color being 'black', size (width x height x depth) of '1904.3 x 1085.3 x 26.9', and ML corresponding to 'ML2'. It is seen that an electronic product having a category of the object corresponding to 'water purifier' and a model name being 'hot and cold water purifier' has model-property information including image information corresponding to 'photos of the same product uploaded by other users', color being 'gray', size (width x height x depth) of '165 x 400 x 250', and ML corresponding to 'ML2'. It is also seen that a piece of furniture having a category of the object corresponding to 'table' and a model name being 'handmade' has model-property information including image information corresponding to 'photos captured by the user in person', color being 'white', size (width x height x depth) of '1600 x 900 x 800', and ML corresponding to 'ML3'.

The user-property information may be information about a location where the object is installed, purchase date and time, life cycle, etc., without being limited thereto. In FIG.7, it is seen that the electronic product having a category of the object corresponding to 'TV' and a model name being 'The Frame 85' has use-property information including a location where the electronic product is installed being 'living room', purchase data and time being '2022.12 (i.e., December 2022)' and life cycle being '15Y (i.e., 15 years)'. It is seen that the electronic product having a category of the object corresponding to 'water purifier' and a model name being 'hot and cold water purifier' has use-property information including a location where the electronic product is installed being 'kitchen', purchase data and time being '2023.01' and life cycle being '5Y'. It is seen that the piece of furniture having a category of the object corresponding to 'table' and a model name being 'handmade' has use-property information including a location where the furniture is installed being 'study room', purchase data and time being '2023.02' and life cycle being '10Y'.

The property information in the personalized database shown in FIG. 7 is merely an example for explanation, and is not limited to the formats. For example, the image information among the model-property information may be an actual image or may have the form of feature information resulting from analysis of an image. In a case of property information that may not be known because it is not input to the cloud server 200, the personalized database may set a value of the property information to 'null' until the property information is updated.

The object information stored in the personalized database may be used to generate a spatial map. For example, in a case of an object recognized from the space scan information, when a spatial map is generated, object information stored in the personalized database may be labeled or tagged onto a location of the object in the spatial map.

Furthermore, the object information stored in the personalized database may be used to identify an object unrecognizable through the object recognition model from the space scan information. When an object may not be accurately recognized, may not be distinguished from another object, or is likely to be wrongly recognized from the space scan information obtained from the electronic device 100 or the loT devices, the electronic device 100 may use object information stored in the personalized database.

For example, in the case of several frames and a wall-mounted TV that displays famous paintings as shown in FIG. 5, the TV may not be recognized or wrongly recognized as a frame due to an intended interior design plan. In this case, when it is identified that the space scan information obtained by the electronic device 100 is an image captured in the 'living room', that edges of the object in the image has black color, and that the size corresponding to width and height of the object is similar to '1904.3 x 1085.3', the object may be accurately inferred as a TV according to the personalized database shown in FIG. 7. As such, when an object may not be recognized or may be wrongly recognized from the space scan information due to similarity in appearance between objects or an intended interior design plan, the object may be accurately identified in the space by using the object information stored in the personalized database.

Among the object information stored in the personalized database, property information not overlapping property information of other objects may be key property information. For example, when a size detected from an area corresponding to an object unrecognizable through the object recognition model equals to certain numerical values stored in the personalized database but differs from sizes of other objects, the size may be the key property information. As such, when feature information detected from an area corresponding to an object unrecognizable through the object recognition model corresponds to key property information of a certain object stored in the personalized database, the electronic device 100 may identify the object unrecognizable through the object recognition model as a particular object having the key property information.

When there is no key property information among at least one feature information detected from an area corresponding to an object unrecognizable through the object recognition model, the electronic device 100 may determine an object having property information that best matches the at least one feature information as an object recognition result of the object unrecognizable through the object recognition model. Alternatively, the electronic device 100 may select objects having property information that matches the at least one feature information to a certain level or higher as object candidates.

The personalized database may be designed to return object information stored therein in response to a query generated based on at least one feature information detected from an area corresponding to an object unrecognizable through the object recognition model. The electronic device 100 may use the query based on the feature information relating to the object unrecognizable through the object recognition model, to identify the object unrecognizable through the object recognition model based on a personalized database. The electronic device 100 may use the query to request collection of object information of at least one object each having property information stored in the personalized database that equals to, best matches or matches to a certain level or higher with the feature information relating to the object unrecognizable through the object recognition model.

In the meantime, a spatial map that uses the object information stored in the personalized database may be used for operation of a robot cleaner, efficient placement of home appliances, interior design recommendations, etc. Furthermore, by labeling or tagging object information into the spatial map, information about objects in the space and a condition of the space where the objects are located may be delivered through the spatial map. Moreover, according to a combination of pieces of property information of objects stored in the personalized database, the spatial map may provide a purchase recommendation function for a product that comes near the end of the life cycle.

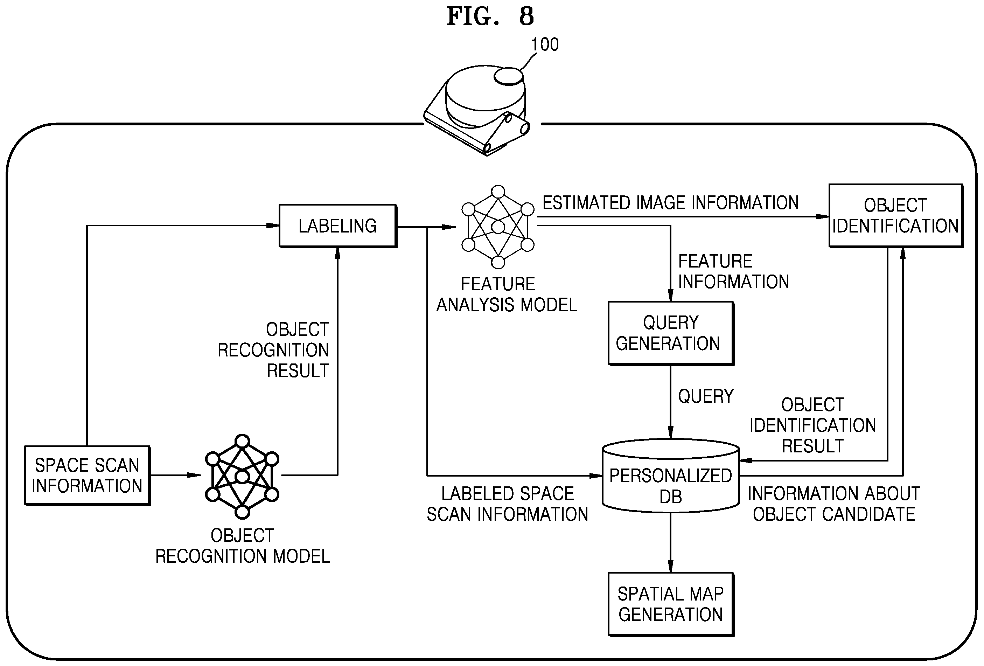

FIG. 8 is a diagram for describing operations of the electronic device 100 obtaining a spatial map, according to an embodiment of the disclosure.

The electronic device 100 may use at least one sensor to scan a space including at least one object and obtain the space scan information. The space scan information may include different formats of information depending on the type of the sensor. For example, when the sensor is an image sensor such as a camera, the space scan information may be an image. When the sensor is a LiDAR sensor, the space scan information may be point cloud data.

The electronic device 100 may input the space scan information obtained to the object recognition model to recognize an object belonging to the space. The object recognition model may receive the space scan information as an input and output an object recognition result. The object recognition results may be divided into objects recognized through the object recognition model and objects unrecognizable through the object recognition model. The electronic device 100 may label the space scan information based on the object recognition result. The objects recognized by the object recognition model may be analyzed and classified, and each object in the space scan information may be labeled with object identification information. The objects unrecognizable through the object recognition model may each be labeled in an area corresponding to the object unrecognizable through the object recognition model in the space scan information as an object unrecognizable through the object recognition model. The labeled space scan information may be stored in an extra map database or in a map database within the personalized database.

At certain intervals or when there is an update of the database stored in the cloud server 200, the electronic device 100 may receive the personalized database from the cloud server 200 and store it in a memory 110 or an extra storage. The personalized database may be an asset database (asset DB). The personalized database may further include a map database (map DB). The asset DB may store and manage property information of each object belonging to the assets of the user for each object. The map DB may store and manage the space scan information or labeled space scan information used to generate a spatial map, or a spatial map.

When there is no object unrecognizable through the object recognition model in the space scan information, the electronic device 100 may update the space scan information labeled with object identification information in the map database. The electronic device 100 may generate a spatial map based on the updated map database.

When there is an object unrecognizable through the object recognition model in the space scan information, the electronic device 100 may input the labeled space scan information to a feature analysis model to obtain feature information relating to the object unrecognizable through the object recognition model. The feature analysis model may extract feature information relating to an area corresponding to the object unrecognizable through the object recognition model in the labeled space scan information. For example, the feature analysis model may extract information about an image, color, size, etc., of the area corresponding to the object unrecognizable through the object recognition model in the labeled image as feature information. The electronic device 100 may use a query based on the feature information relating to the object unrecognizable through the object recognition model, to identify the object unrecognizable through the object recognition model based on the personalized database. The electronic device 100 may compare the feature information included in the query with property information of each object stored in the personalized database to obtain information about object candidates having property information corresponding to the feature information. The object candidates may include at least one object. The electronic device 100 may compare estimated image information of the object unrecognizable through the object recognition model with image information of each object included in the object candidates, and based on a result of the comparing, identify the object unrecognizable through the object recognition model. When the object identification is completed even for the object unrecognizable through the object recognition model in the space scan information, the object identification result may be reflected in the labeled space scan information including the object unrecognizable through the object recognition model.

The electronic device 100 may generate a spatial map for the space based on the space scan information and object information for an object belonging to the space. The electronic device 100 may generate a spatial map for a space, based on the updated personalized database.

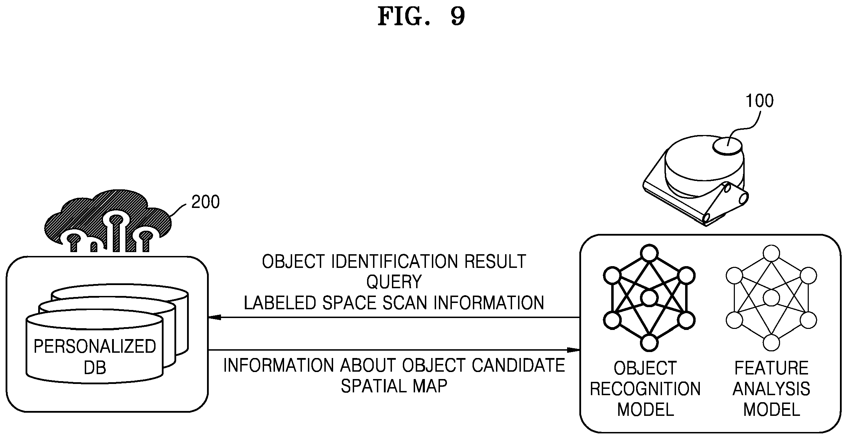

FIG. 9 is a diagram for describing operations of the electronic device 100 obtaining a spatial map through communication with the cloud server 200, according to an embodiment of the disclosure.

How the electronic device 100 receives the personalized database from the cloud server 200, stores it in a memory 110 or an extra storage and generates a spatial map at certain intervals or when there is an update of the database stored in the cloud server 200 was described above in FIG. 8. In FIG. 9, described is how the electronic device 100 generates a spatial map by using the personalized database stored in the cloud server 200. Descriptions that overlap FIG. 8 will not be repeated.

The cloud server 200 may manage the personalized database for each user. The personalized database may include an asset DB that stores and manages property information of each object belonging to the assets of the user for each object, and a map DB that stores and manages the space scan information or the labeled space scan information used to generate a spatial map, or a spatial map.

The electronic device 100 may obtain space scan information, and recognize an object belonging to a space by inputting the space scan information obtained to the object recognition model. The electronic device 100 may label the space scan information based on the object recognition result, and transmit the labeled space scan information to the cloud server 200. When there is an object unrecognizable through the object recognition model in the space scan information, the electronic device 100 may input the labeled space scan information to a feature analysis model to obtain feature information relating to the object unrecognizable through the object recognition model. The electronic device 100 may generate a query based on the feature information relating to the object unrecognizable through the object recognition model, and transmit the query to the cloud server 200 including the personalized database. The electronic device 100 may receive information about object candidates from the cloud server 200 as a response to transmitting the query to the cloud server 200. The cloud server 200 may compare the feature information included in the query with property information of each object stored in the personalized database to transmit information about object candidates having property information corresponding to the feature information to the electronic device 100.

The electronic device 100 may compare estimated image information of the object unrecognizable through the object recognition model with image information of each object included in the object candidates, and based on a result of the comparing, identify the object unrecognizable through the object recognition model. The electronic device 100 may transmit an object identification result to the cloud server 200.

The cloud server 200 may generate a spatial map for the space based on the space scan information and object information for an object belonging to the space. The cloud server 200 may generate a spatial map for the space, based on the updated personalized database. The cloud server 200 may transmit the spatial map for the space to the electronic device 100.

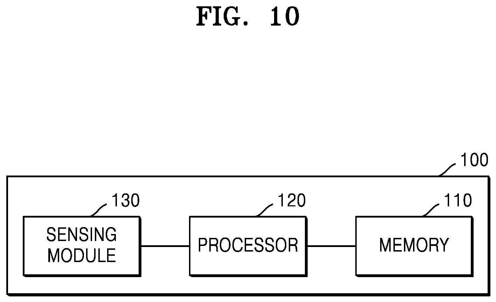

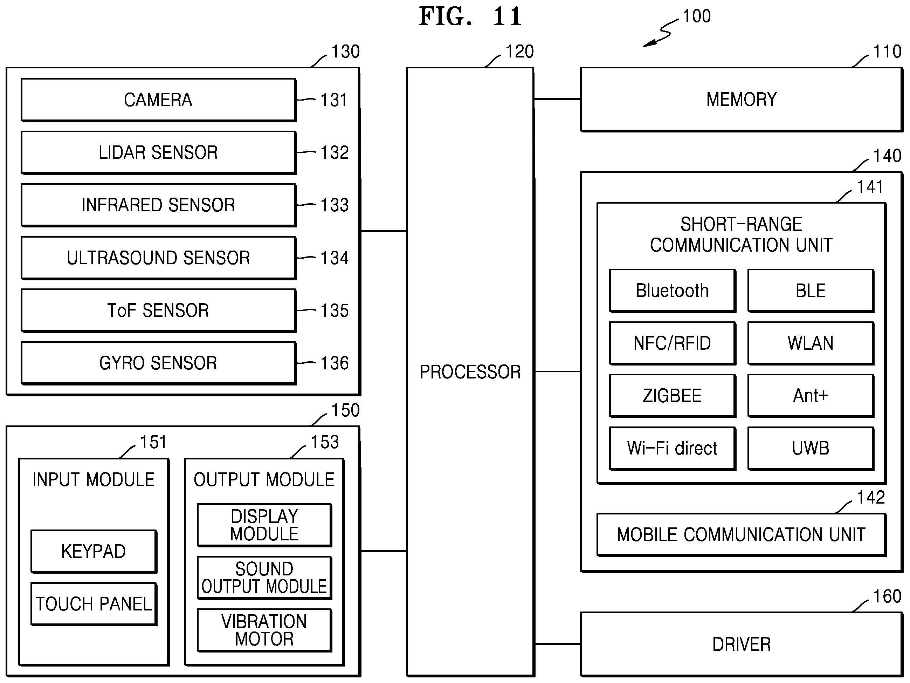

FIGS. 10 and 11 are block diagrams of the electronic device 100, according to an embodiment of the disclosure.

Referring to FIG.10, the electronic device 100 according to an embodiment of the disclosure may include the memory 110, a processor 120, and a sensing module 130, but is not limited thereto and a universal component may be further added thereto. For example, as shown in FIG. 11, the electronic device 100 may further include a communication module 140, an input/output module 150, and a driver 160 in addition to the memory 110, the processor 120 and the sensing module 130. The respective components will now be described in detail with reference to FIGS. 10 and 11.

In an embodiment of the disclosure, the memory 110 may store a program for processes and control of the processor 120, and store data input to or generated from the electronic device 100. Instructions, data structures, and program codes that are readable to the processor 120 may be stored in the memory 110. In embodiments of the disclosure, the processor 120 may be implemented by executing the instructions or codes of the program stored in the memory 110.

In an embodiment of the disclosure, the memory 110 may include a flash memory type, a hard disk type, a multimedia card micro type, or a card type memory (e.g., secure digital (SD) or eXtreme digital (XD) memory), and may include a non-volatile memory including at least one of a read-only memory (ROM), an electrically erasable programmable ROM (EEPROM), a programmable ROM (PROM), a magnetic memory, a magnetic disc or an optical disc and a volatile memory such as a random access memory (RAM) or a static RAM (SRAM).

In an embodiment of the disclosure, the memory 110 may store one or more instructions and/or programs for controlling the electronic device 100 to train a neural network model. For example, the memory 110 may store an object recognition module, a feature analysis module, an object identification module, a space map generation module, etc.

In an embodiment of the disclosure, the processor 120 may control an operation or function for the electronic device 100 to perform a task by executing the instructions or a programmed software module stored in the memory 110. The processor 120 may include hardware components for performing arithmetic, logical, and input/output operations and signal processing. The processor 120 may execute the one or more instructions stored in the memory 110 to control general operations for the electronic device 100 to train the neural network model and use the trained neural network model to perform a task. The processor 120 may control the sensing module 130 including at least one sensor, the communication module 140, the input/output module 150 and the driver 160 by executing the programs stored in the memory 110.

In an embodiment of the disclosure, the processor 120 may include at least one of e.g., a central processing unit (CPU), a microprocessor, a graphic processing unit (GPU), an application specific integrated circuit (ASIC), a digital signal processor (DSP), a digital signal processing device (DSPD), a programmable logic device (PLD), a field programmable gate array (FPGA), an application processor (AP), a neural processing unit (NPU) or an Al specific processor designed in a hardware structure specialized in processing of an Al model, without being limited thereto. Each processor included in the processor 120 may be a dedicated processor for performing a certain function.

In an embodiment of the disclosure, the Al processor may use the Al model to perform operation and control to handle a task configured to be performed by the electronic device 100. The Al processor may be manufactured into the form of a dedicated hardware chip for Al, or manufactured as a portion of a universal processor (e.g., a CPU or an AP) or GPU and mounted in the electronic device 100.

In an embodiment of the disclosure, the sensing module 130 may include multiple sensors configured to detect information about a surrounding environment. For example, the sensing module 130 may include a camera 131, a LiDAR sensor 132, an infrared sensor 133, an ultrasound sensor 134, a **ToF** sensor 135, a gyro sensor 136, etc., without being limited thereto.

In an embodiment of the disclosure, the camera 131 may include a stereo camera, a mono camera, a wide-angle camera, an around-view camera, a 3D vision sensor, or the like.

The LiDAR sensor 132 may shot a laser beam to a target to detect a distance to the object and various material properties. The LiDAR sensor 132 may detect a surrounding object, terrain features, etc., and may be used to model this into a 3D image.

The infrared sensor 133 may be one of an active infrared sensor that radiates infrared rays to block light and thus detect a change and a manual infrared sensor that detects a change in infrared ray received from outside. For example, an infrared proximity sensor may be installed around a wheel to irradiate infrared rays onto the floor and receive a reflected ray, thereby being used as a fall prevention sensor.

The ultrasound sensor 134 may measure a distance to an object by using ultrasound, and emit and detect ultrasound pulses that deliver information about proximity of the object. The ultrasound sensor 134 may be used to detect an adjacent object and detect a transparent object.

The ToF sensor 135 may obtain a 3D effect, motion and spatial information of an object by calculating a round-trip distance of light that emits to the object and bounces off and returns from the object into a time. The ToF sensor 135 may allow high-level object recognition of an obstacle in a complicated space or dark place and even within its reach, enabling the electronic device 100 to avoid the obstacle.

The gyro sensor 136 may detect angular speed. The gyro sensor 136 may be used for location measurement and direction setting of the electronic device 100.

In an embodiment of the disclosure, the sensing module 130 may be used to scan a space including at least one object and generate the space scan information by using the at least one sensor. The electronic device 100 may use a plurality of sensors of the same kind or different kinds among the camera 131, the LiDAR sensor 132, the infrared sensor 133, the ultrasound sensor 134, the ToF sensor 135 and the gyro sensor 136 to obtain the space scan information or object information, thereby obtaining spatial information for the space including the at least one object. When the electronic device 100 has difficulty in recognizing an object depending on a direction in which the object faces, or a distance or relative position between the object and the electronic device 100, the electronic device 100 may shift in location to a certain viewpoint and use the sensing module 130 at the shifted location to obtain space scan information or object information again.

The communication module 140 may include one or more components that enable the electronic device 100 to communicate with an external device, e.g., the cloud server 200, the loT devices 300-1, 300-2 and 300-3 and a user equipment (not shown). For example, the communication module 140 may include a short-range wireless communication unit 141, a mobile communication unit 142, etc., without being limited thereto.

The short-range wireless communication unit 141 may include a Bluetooth^{™} communication unit, a Bluetooth^{™} low energy (BLE) communication unit, a near field communication (NFC) unit, a wireless local area network (WLAN), e.g., Wi-Fi, communication unit, a Zigbee communication unit, an Ant+ communication unit, a Wi-Fi direct (WFD) communication unit, an ultra-wideband (UWB) communication unit, an infrared data association (IrDA) communication unit, a microwave ((uWave) communication unit, etc., without being limited thereto.

The mobile communication unit 142 transmits or receives wireless signals to and from at least one of a base station, an external terminal, or a server in a mobile communication network. The wireless signal may include a voice call signal, a video call signal or different types of data involved in transmission/reception of a text/multimedia message.

Referring to FIG. 11, the electronic device 100 may further include the input/output module 150 and the driver 160, and although not shown in FIG. 11, include an additional component such as a power module.

The input/output module 150 may include an input module 151 and an output module 153. The input/output module 150 may have a form in which the input module 151 and the output module 153 are separated, or a form in which the input module 151 and the output module 153 are integrated such as a touch screen. The input/output module 150 may receive input information from the user and provide output information to the user.

The input module 151 may refer to a means that allows the user to input data to control the electronic device 100. For example, the input module 151 may be a key pad, a touch panel (in contact capacitive type, pressure resistive type, infrared detection type, surface acoustic wave type, integral strain gauge type, piezoelectric effect type), etc. In addition, the input module 151 may be a jog wheel, a jog switch, etc., without being limited thereto.

The output module 153 may output an audio signal, a video signal, or a vibration signal, and the output module 153 may include a display module, a sound output module and a vibration motor.

The display module may display information processed by the electronic device 100. For example, the display module may display a user interface to receive an input of the user's manipulation. In a case that the display module and a touch pad are implemented in a layered structure to constitute a touch screen, the display module may also be used as an input device apart from the output device. The display module may include at least one of a liquid crystal display (LCD), a thin film transistor-liquid crystal display (TFT-LCD), organic light-emitting diodes (OLEDs), a flexible display, or a 3D display. Depending on the form of implementation of the electronic device 100, the electronic device 100 may include two or more display modules.

The sound output module may output audio data stored in the memory 110. The sound output module may also output sound signals related to a function being performed in the electronic device 100. The sound output module may include a speaker, buzzer, etc.

The vibration motor may output a vibration signal. For example, the vibration motor may output a vibration signal corresponding to an output of audio data or video data. The vibration motor may output a vibration signal when a touch is made on the touch screen.

The driver 160 may include components used for driving (traveling) of the electronic device 100 and operations of devices in the electronic device 100. When the electronic device 100 is a robot cleaner, the driver 160 may include a suction part, a traveling part, etc., but is not limited thereto, and the driver 160 may be different depending on the type of the electronic device 100.

The suction part has a function of collecting dust from the floor by sucking up the air, and may include a rotation brush or broomstick, a rotation brush motor, an air intake, a filter, a dust collection room, an air outlet, etc., without being limited thereto. The suction part may be mounted in a structure where a brush capable of sweeping dust off from the corners is rotated.

The traveling part may include a motor for rotating each wheel installed on the electronic device 100, a timing belt installed to deliver power produced from the wheel, etc., without being limited thereto.

In an embodiment of the disclosure, the processor 120 may execute the one or more instructions stored in the memory 110 to recognize an object belonging to a space from the space scan information for the space obtained by using the sensing module 130. For example, when the sensing module 130 includes the camera 131 and/or the LiDAR sensor 132, the sensing module 130 may obtain an RGB signal and/or point cloud type data as the space scan information for the space. The processor 120 may input the space scan information obtained with the sensing module 130 to recognize an object belonging to the space. The object recognition model may analyze the object and classify the analyzed object based on the space scan information. For example, with an input of an image generated from the RGB signal, the object recognition model may analyze and classify an object in the image. In another example, the object recognition model may analyze and classify the object with an input of clustered point cloud data The processor 120 may recognize the object belonging to the space according to analysis and classification of the object. An object not recognized by the object recognition model or not classified as an object in a certain class may be treated as an unrecognizable object.

The processor 120 may execute the one or more instructions stored in the memory 110 to obtain feature information relating to the object unrecognizable through the object recognition model from the space scan information. For example, the feature information relating to the object unrecognizable though the object recognition model from the space scan information may be obtained from an image generated from the RGB signal or data in a point cloud form. After recognizing the object belonging to the space from the space scan information by using the object recognition model, the processor 120 may use a feature analysis model to extract feature information relating to the object unrecognizable through the object recognition model from space scan information labeled according to the object recognition result. For example, the processor 120 may obtain, as feature information, information about the size or color of the object unrecognizable through the object recognition model from an image generated from the RGB signal through a first feature analysis model. In another example, the processor 120 may obtain, as feature information, information about the shape or size of the object unrecognizable through the object recognition model from the data in a point cloud form through a second feature analysis model. In another example, the processor 120 may obtain, as feature information, location information of the object unrecognizable through the object recognition model, based on relationships with other recognized objects or a location at which the space scan information is obtained, through a third feature analysis model.

The processor 120 may execute the one or more instructions stored in the memory 110 to use a query based on the feature information relating to the object unrecognizable through the object recognition model to identify the object unrecognizable through the object recognition model based on a personalized database. The query is a request to collect information about at least one object whose property information for each object stored in the personalized database matches to a certain level or higher with the obtained feature information. The personalized database may be stored in the external cloud server 200. The personalized database may be managed by the cloud server 200. At certain intervals or when there is an update of the database stored in the cloud server 200, the electronic device 100 may receive the personalized database from the cloud server 200 and store it in a memory 110 or an extra storage.

The processor 120 may obtain information about object candidates from the personalized database in response to the query. The personalized database may register property information of each object belonging to assets of the user for each object. The property information may include model-property information determined in a production process of the object and use-property information determined in a use process of the user. For example, the processor 120 may compare the feature information included in the query with property information of each object stored in the personalized database to obtain information about object candidates having property information corresponding to the feature information. For example, the processor 120 may receive information about object candidates from the cloud server 200 as a response to transmitting the query to the cloud server 200 including the personalized database through the communication module 140. The processor 120 may compare estimated image information of an object unrecognizable through the object recognition model with image information of each object included in the object candidates, and based on a result of the comparing, identify the object unrecognizable through the object recognition model. When the estimated image information of the object unrecognizable through the object recognition model may not be obtained, the processor 120 may shift the location of the electronic device 100 to a certain viewpoint. The processor 120 may use the sensing module 130 to generate the estimated image information of the object unrecognizable through the object recognition model at the shifted location.

The processor 120 may execute the one or more instructions stored in the memory 110 to generate a spatial map for the space based on the space scan information and object information for an object belonging to the space. The processor 120 may update the personalized database based on the space scan information and object information of an object belonging to the space. The processor 120 may generate a spatial map for the space, based on the updated personalized database.

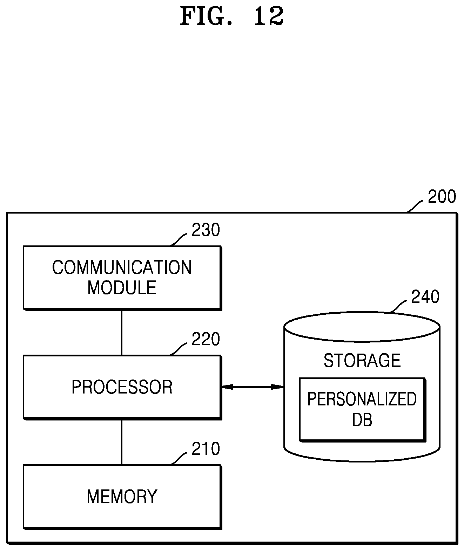

FIG. 12 is a block diagram of a server 200, according to an embodiment of the disclosure.

Referring to FIG. 12, the server 200 may include a memory 210, a processor 220, a communication module 230 and a storage 240.

The memory 210 may store various data, programs or applications for driving and controlling the server 200. One or more instructions or applications stored in the memory 210 may be executed by the processor 220. The memory 210 may store a database management module, a space map generation module, and corresponding data and program instruction codes. The processor 220 may generally control the server 200. In an embodiment of the disclosure, the processor 220 may execute the one or more instructions stored in the memory 210.

The communication module 230 may include one or more components that enable communication through a local area network (LAN), a wide area network (WAN), a value-added network (VAN), a mobile radio communication network, a satellite communication network and any combination thereof.

The storage 240 may store a personalized database. The personalized database may be an asset DB that stores and manages property information of each object belonging to assets of the user for each object. The personalized database may further include a map DB that stores and manages space scan information or labeled space scan information used to generate a spatial map, or the spatial map.

In an embodiment of the disclosure, the processor 220 may execute the one or more instructions stored in the memory 210 to manage the personalized database for each user and/or space. Construction and management of the personalized database was described above in connection with FIG. 7, so the detailed description thereof will be omitted.

In an embodiment of the disclosure, the processor 220 may execute the one or more instructions stored in the memory 210 to, when there is a request related to the personalized database from an external device, transmit part or the whole of the database or certain information stored in the database to the external device through the communication module 230 in response to the request. For example, the cloud server 200 may compare the feature information included in the query received from the electronic device 100 with property information of each object stored in the personalized database to transmit information about object candidates having property information corresponding to the feature information to the electronic device 100. In another example, the cloud server 200 may generate a spatial map based on the asset DB that stores and manages property information of each object belonging to assets of the user for each object and the map DB that stores and manages space scan information or labeled space scan information or a spatial map and transmit the spatial map to the electronic device 100, at a spatial map request received from the electronic device 100.

In the meantime, embodiments of the disclosure may be implemented in the form of a recording medium that includes computer-executable instructions such as the program modules executed by the computer. Computer-readable mediums may be an arbitrarily available medium that may be accessed by the computer, including volatile, non-volatile, removable, and non-removable mediums. The computer-readable medium may also include a computer storage medium and a communication medium. The computer storage medium includes all the volatile, non-volatile, removable, and non-removable mediums implemented by an arbitrary method or technology for storage of information, such as computer-readable instructions, data structures, program modules, or other data. The communication medium may include other data of modulated data signals such as computer-readable instructions, data structures, or program modules.

The computer-readable storage medium may be provided in the form of a non-transitory storage medium. The term 'non-transitory storage medium' may mean a tangible device without including a signal, e.g., electromagnetic waves, and may not distinguish between storing data in the storage medium semi-permanently and temporarily. For example, the non-transitory storage medium may include a buffer that temporarily stores data.

In an embodiment of the disclosure, the aforementioned method according to the various embodiments of the disclosure may be provided in a computer program product. The computer program product may be a commercial product that may be traded between a seller and a buyer. The computer program product may be distributed in the form of a storage medium (e.g., a CD-ROM), through an application store, directly between two user devices (e.g., smart phones), or online (e.g., downloaded or uploaded). In the case of online distribution, at least part of the computer program product (e.g., a downloadable app) may be at least temporarily stored or arbitrarily created in a storage medium that may be readable to a device such as a server of the manufacturer, a server of the application store, or a relay server.

An embodiment of the disclosure provides a method of obtaining a spatial map. The method of obtaining a spatial map may include recognizing an object belonging to a space from space scan information for the space obtained by using at least one sensor, in operation S610. The method of obtaining a spatial map may also include obtaining feature information relating to an object unrecognizable through an object recognition model from the space scan information, in operation S620. The method of obtaining a spatial map may also include identifying an object unrecognizable through the object recognition model based on a personalized database by using a query based on the feature information obtained, in operation S630. The method of obtaining a spatial map may also include generating a spatial map for the space based on the space scan information and object information for an object belonging to the space, in operation S640.

In an embodiment of the disclosure, the identifying of the object unrecognizable through the object recognition model based on the personalized database in operation S630 may include obtaining information about object candidates from the personalized database in response to the query. The identifying of the object unrecognizable through the object recognition model based on the personalized database in operation S630 may include comparing estimated image information of the object unrecognizable through the object recognition model with image information of each object included in the object candidates, and based on a result of the comparing, identifying the object unrecognizable through the object recognition model.

The obtaining of the information about object candidates may include comparing the feature information included in the query with property information of each object stored in the personalized database to obtain information about object candidates having property information corresponding to the feature information.

The query is a request to collect object information about at least one object whose property information for each object stored in the personalized database matches to a certain level or higher with the obtained feature information.

The identifying of the object unrecognizable through the object recognition model based on the result of the comparing may include shifting a location of the electronic device 100 including at least one sensor to a certain viewpoint, and generating estimated image information of the object unrecognizable through the object recognition model by using the at least one sensor at the shifted location.

The obtaining of the information about object candidates may include receiving information about object candidates from the cloud server 200 as a response to transmitting the query to the cloud server 200 including the personalized database.

Furthermore, in an embodiment of the disclosure, the recognizing of the object belonging to the space in operation S610 may include recognizing an object belonging to the space from the space scan information by using the object recognition model. The obtaining of the feature information in operation S620 may include using a feature analysis model to extract feature information relating to the object unrecognizable through the object recognition model from the space scan information labeled according to the object recognition result.

In an embodiment of the disclosure, the method of obtaining the spatial map may further include updating the personalized database based on the space scan information and object information about an object belonging to the space. The generating of the spatial map for the space in operation S640 may include generating a spatial map for the space, based on the updated personalized database.

The personalized database may register property information of each object belonging to the user's assets for each object. The property information may include model-property information determined in a production process of the object and use-property information determined in a use process of the user.

According to an embodiment of the disclosure, a computer-readable recording medium having a program recorded thereon for performing the aforementioned method may be provided.

In an embodiment of the disclosure, the electronic device 100 includes the memory 110 for storing one or more instructions, the processor 120 for executing the one or more instructions stored in the memory 110, and the sensing module 130 including at least one sensor. The processor 120 may execute the one or more instructions to recognize an object belonging to the space from the space scan information for the space obtained by using the sensing module 130. The processor 120 may also execute the one or more instructions to obtain feature information relating to an object unrecognizable through an object recognition model from the space scan information. The processor 120 may also execute the one or more instructions to identify an object unrecognizable through the object recognition model based on a personalized database by using a query based on the feature information obtained. The processor 120 may also execute the one or more instructions to generate a spatial map for the space based on the space scan information and object information for an object belonging to the space.

In an embodiment of the disclosure, the processor 120 may execute the one or more instructions to obtain information about object candidates from the personalized database in response to the query. The processor 120 may also execute the one or more instructions to compare estimated image information of an object unrecognizable through the object recognition model with image information of each object included in the object candidates, and based on a result of the comparing, identify the object unrecognizable through the object recognition model.

The processor 120 may also execute the one or more instructions to compare the feature information included in the query with property information of each object stored in the personalized database to obtain information about object candidates having property information corresponding to the feature information.

The query is a request to collect object information about at least one object whose property information for each object stored in the personalized database matches to a certain level or higher with the obtained feature information.

The processor 120 may execute the one or more instructions to shift a location of the electronic device 100 to a certain viewpoint and use the sensing module 130 to generate estimated image information of the object unrecognizable through the object recognition model at the shifted location.

The electronic device 100 may further include a communication module, and the processor 120 may execute the one or more instructions to receive information about object candidates from the cloud server 200 as a response to transmitting the query to the cloud server 200 including the personalized database through the communication module 140.

In an embodiment of the disclosure, the processor 120 may execute the one or more instructions to recognize an object belonging to the space from the space scan information by using the object recognition model, and use a feature analysis model to extract feature information relating to the object unrecognizable through the object recognition model from space scan information labeled according to the object recognition result.

In an embodiment of the disclosure, the processor 120 may execute the one or more instructions to update the personalized database based on the space scan information and object information of an object belonging to the space and generate a spatial map for the space, based on the updated personalized database.

The personalized database may register property information of each object belonging to the user's assets for each object. The property information may include model-property information determined in a production process of the object and use-property information determined in a use process of the user.

Several embodiments have been described, but a person of ordinary skill in the art will understand and appreciate that various modifications can be made without departing the scope of the disclosure. Thus, it will be apparent to those of ordinary skill in the art that the disclosure is not limited to the embodiments described, but can encompass not only the appended claims but the equivalents. For example, an element described in the singular form may be implemented as being distributed, and elements described in a distributed form may be implemented as being combined.

Any such software may be stored in a non-transitory computer readable storage medium. The non-transitory computer readable storage medium stores one or more programs (software modules), the one or more programs comprising instructions, which when executed by one or more processors in an electronic device, cause the electronic device to perform a method of the disclosure.

Any such software may be stored in the form of volatile or non-volatile storage such as, for example, a storage device like read only memory (ROM), whether erasable or rewritable or not, or in the form of memory such as, for example, random access memory (RAM), memory chips, device or integrated circuits or on an optically or magnetically readable medium such as, for example, a compact disk (CD), digital versatile disc (DVD), magnetic disk or magnetic tape or the like. It will be appreciated that the storage devices and storage media are various embodiments of non-transitory machine-readable storage that are suitable for storing a program or programs comprising instructions that, when executed, implement various embodiments of the disclosure. Accordingly, various embodiments provide a program comprising code for implementing apparatus or a method as claimed in any one of the claims of this specification and a non-transitory machine-readable storage storing such a program.

While the disclosure has been shown and described with reference to various embodiments thereof, it will be understood by those skilled in the art that various changes in form and details may be made therein without departing from the spirit and scope of the disclosure as defined by the appended claims and their equivalents.

## Claims

1. A method performed by an electronic device for obtaining a spatial map, the method comprising:
recognizing an object belonging to a space from space scan information for the space, obtained by using at least one sensor (S610);
obtaining feature information relating to an object unrecognizable through an object recognition model from the space scan information (S620);
identifying, by using a query based on the obtained feature information, the object unrecognizable through the object recognition model, based on a personalized database (S630); and
generating a spatial map for the space, based on the space scan information and object information for the object belonging to the space (S640).

2. The method of claim 1, wherein the identifying (S630) comprises:
obtaining information about object candidates from the personalized database, in response to the query; and
comparing estimated image information of the object unrecognizable through the object recognition model with image information of each object included in the object candidates, and identifying, based on a result of the comparing, the object unrecognizable through the object recognition model.

3. The method of claim 1 or 2, wherein the obtaining of the information about object candidates comprises:
comparing the feature information included in the query with property information of each object stored in the personalized database to obtain the information about the object candidates having property information corresponding to the feature information.

4. The method of any of claims 1 to 3, wherein the query is a request to collect object information about at least one object whose property information for each object stored in the personalized database matches to a certain level or higher with the obtained feature information.

5. The method of any of claims 1 to 4, wherein the identifying of the object unrecognizable through the object recognition model based on the result of the comparing comprises:
shifting a location of an electronic device (100) including the at least one sensor to a certain viewpoint; and
generating estimated image information of the object unrecognizable through the object recognition model, by using the at least one sensor, at the shifted location.

6. The method of any of claims 1 to 5, wherein the obtaining of the information about object candidates comprises receiving the information about the object candidates from a cloud server (200) as a response to transmitting the query to the cloud server (200) including the personalized database.

7. The method of any of claims 1 to 6,
wherein the recognizing of the object belonging to the space (S610) comprises recognizing, by using the object recognition model, the object belonging to the space from the space scan information, and
wherein the obtaining of the feature information (S620) comprises extracting, by using a feature analysis model, the feature information relating to the object unrecognizable through the object recognition model from the space scan information labeled according to a result of the object recognition.

8. The method of any of claims 1 to 7, further comprising:
updating the personalized database, based on the space scan information and the object information for the object belonging to the space,
wherein the generating of the spatial map for the space (S640) comprises generating the spatial map for the space, based on the updated personalized database.

9. The method of any of claims 1 to 8,
wherein the personalized database registers property information of each object belonging to assets of a user for each object, and
wherein the property information comprises model-property information determined in a production process of an object and use-property information determined in a use process of the user.

10. A computer-readable recording medium having recorded thereon a program for carrying out the method of any of claims 1 to 9.

11. An electronic device (100) comprising:
a memory (110) storing one or more programs;
one or more processors (120); and
a sensing module (130) including at least one sensor,
wherein the one or more programs include computer-executable instructions that, when executed by the one or more processors (120), cause the electronic device (100) to:
recognize an object belonging to a space from space scan information for the space, obtained by using the sensing module (130),
obtain feature information relating to an object unrecognizable through an object recognition model from the space scan information,
identify, by using a query based on the obtained feature information, the object unrecognizable through the object recognition model, based on a personalized database, and
generate a spatial map for the space based on the space scan information and object information for the object belonging to the space.

12. The electronic device (100) of claim 11, wherein the one or more programs further include computer-executable instructions that, when executed by the one or more processors (120), cause the electronic device (100) to:
obtain information about object candidates from the personalized database, in response to the query,
compare estimated image information of the object unrecognizable through the object recognition model with image information of each object included in the object candidates, and
identify, based on a result of the comparing, the object unrecognizable through the object recognition model.

13. The electronic device (100) of claim 11 or 12, wherein the one or more programs further include computer-executable instructions that, when executed by the one or more processors (120), cause the electronic device (100) to:
recognize, by using the object recognition model, the object belonging to the space from the space scan information, and
extract, by using a feature analysis model, the feature information relating to the object unrecognizable through the object recognition model from the space scan information labeled according to a result of the object recognition.

14. The electronic device (100) of any of claims 11 to 13, wherein the one or more programs further include computer-executable instructions that, when executed by the one or more processors (120), cause the electronic device (100) to:
update the personalized database based on the space scan information and the object information for the object belonging to the space, and
generate the spatial map for the space, based on the updated personalized database.

15. The electronic device (100) of any of claims 11 to 14,
wherein the personalized database registers property information of each object belonging to assets of a user for each object, and
wherein the property information comprises model-property information determined in a production process of an object and use-property information determined in a use process of the user.
